# EUROPÄISCHE PATENTSCHRIFT

(11) **EP 4 500 005 B1**
(45) Veröffentlichungstag und Bekanntmachung des Hinweises auf die Patenterteilung: **11.03.2026**
(21) Anmeldenummer: 23700988.1
(22) Anmeldetag: 16.01.2023
(51) Int. Cl.: F03B 1/00, F03B 11/04

(54) **HYDRAULISCHE MASCHINE MIT UEBERWACHUNGSSYSTEM**
HYDRAULIC MACHINE WITH A MONITORING SYSTEM
MACHINE HYDRAULIQUE DOTÉE D'UN SYSTÈME DE SURVEILLANCE

(30) Priorität: 25.03.2022 AT 501942022
(43) Veröffentlichungstag der Anmeldung: 05.02.2025
(73) Patentinhaber: Andritz Hydro GmbH, 1120 Wien (AT)
(72) Erfinder: WEIBEL, Pascal, 6212 St. Erhard (CH); MARONGIU, Jean-Christophe, 1071 Chexbres (CH); GERVAIS, Nicolas, 25370 Les Longevilles Mt d´Or (FR); RENTSCHLER, Martin, 1800 Vevey (CH); PARKINSON, Etienne, 1072 Forel (Lavaux) (CH); RUCHONNET, Nicholas, 1071 Rivaz (CH)
(74) Vertreter: Tschinder, Thomas
(86) Internationale Anmeldenummer: PCT/EP2023/050802
(87) Internationale Veröffentlichungsnummer: WO 2023/179928

(56) Entgegenhaltungen:
- EP-A1- 3 006 729
- CN-A- 112 963 286
- JP-A- 2007 291 986
- KR-B1- 102 329 136

## Beschreibung

Den Gegenstand dieser Erfindung bildet eine hydraulische Maschine, welche dazu bestimmt ist, von einer erzwungenen Wasserströmung durchströmt zu werden, wobei die hydraulische Maschine einen Läufer mit einer Vielzahl von Schaufeln oder Bechern aufweist, der von einem Gehäuse umgeben ist.

Bei hydraulischen Maschinen und speziell bei Pelton-Turbinen kann sich durch Abrasion die Eigenfrequenz des Laufrades ändern. Insbesondere wenn sedimentreiches Wasser zum Betreib der Turbine verwendet wird, kommt es zur Abrasion an den Bechern. Durch den Massenverlust ändert sich die Eigenfrequenz der Turbine. Für den sicheren Betrieb einer Turbine ist es wichtig, dass die Eigenfrequenz nicht ein Vielfaches der Anregefrequenz beträgt. Wenn beispielsweise ein Pelton-Laufrad mit einer Frequenz von 10 Hertz rotiert und durch 6 Düsen beaufschlagt wird, beträgt die Anregefrequenz 60 Hertz. Wenn nun die Eigenfrequenz des Laufrades ein Vielfaches davon beträgt, beispielsweise 600 Hertz, dann kann dies zu erheblichen Vibrationen führen, die letztendlich sogar zur Zerstörung des Laufrades führen können (Resonanzkatastrophe). Daher wird bei der Fertigung eines Laufrades darauf geachtet, dass die Eigenfrequenz kein Vielfaches der Anregefrequenz ist. Die Änderung der Eigenfrequenz während des Betriebes kann daher sehr problematisch sein. Die Laufräder müssen daher in regelmäßigen Abständen angehalten und inspiziert werden, dies ist aufwändig und nimmt ein bis drei Tage in Anspruch.

Ein Beispiel einer hydraulischen Maschine mit Laufrad ist in dem Dokument EP 3 006 729 A1 gezeigt.

Der Erfindung liegt daher die Aufgabe zugrunde, eine hydraulische Maschine bereitzustellen, die hinsichtlich der Eigenfrequenz überwacht wird, ohne dass dafür die Turbine angehalten werden muss.

Gelöst wird diese Aufgabe durch eine hydraulische Maschine mit einer messtechnischen Anordnung gemäß Patentanspruch 1.

Erfindungsgemäß ist im Gehäuse zumindest ein feststehender Positionssensor angeordnet. Der Positionssensor befindet sich dabei neben der Bewegungsbahn der Schaufeln bzw. Becher, wobei der Positionssensor beim Vorbeistreichen einer Schaufel bzw. eines Bechers ein Messsignal abgibt zur genauen Positionsbestimmung der jeweiligen Schaufel bzw. des jeweiligen Bechers. Zusätzlich ist in der hydraulischen Maschine ein Referenzsensor angeordnet, vorzugsweise im Bereich der Turbinenwelle. Dieser Referenzsensor ermittelt die aktuelle Winkelposition jeder Schaufel bzw. jedes Bechers. Aus diesen Positionsdaten der Sensoren kann das dynamische Verhalten jeder Schaufel bzw. jedes Bechers ermittelt werden. Das heißt, es können damit die Vibrationen und/oder Amplituden der einzelnen Schaufeln bzw. Becher ermittelt werden und so können Rückschlüsse auf die Eigenfrequenz der Turbine gezogen werden. Durch spezielle Signalanalysen können die Eigenfrequenzen bestimmt werden.

Wenn sich im Betrieb beispielsweise durch Abrasion oder Risse die Masse der Schaufeln bzw. Becher oder die Steifigkeit ändert und somit die Eigenfrequenz, kann dies durch diese Messung erkannt werden, ohne dass die Turbine gestoppt und inspiziert werden muss.

Die Messung kann dabei kontinuierlich während des gesamten Betriebes erfolgen oder in regelmäßigen Intervallen.

Um eine verlässliche Datenauswertung zu gewährleisten, ist es vorteilhaft, wenn die Datenerfassung im MHz-Bereich erfolgt.

Vorzugsweise sind zumindest zwei Positionssensoren im Gehäuse angeordnet. Dadurch lässt sich die Messgenauigkeit erheblich erhöhen.

Der Schutz der Sensoren vor Wasser ist wichtig.

Die Erfindung eignet sich besonders gut für Pelton-Laufräder, die in der Regel über zumindest eine Düse mit Wasser beaufschlagt werden. Dabei ist es günstig, wenn der oder die Positionssensoren im Düsengehäuse angeordnet sind.

Es ist aber auch denkbar, dass der Läufer ein Francis-Laufrad, eine Pumpturbine oder eine Kaplan-Turbine ist. Bei der hydraulischen Maschine kann es sich auch um eine Pumpe handeln.

Im Folgenden wird die Erfindung anhand einer Zeichnung beschrieben.

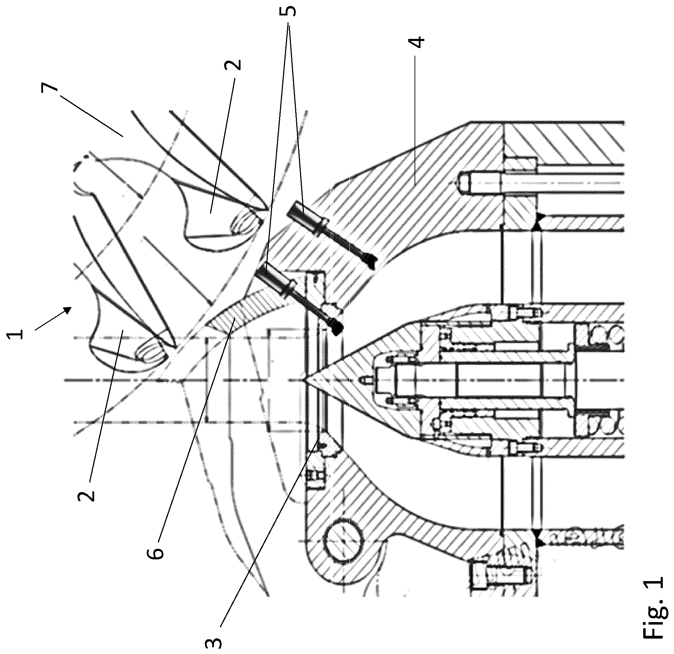

Figur 1 zeigt hierbei einen Ausschnitt eines Läufers 7 einer Pelton-Turbine 1 mit dem erfindungsgemäßen Überwachungssystem. Hierbei sind in einem Düsengehäuse 4 der Pelton-Turbine 1 hintereinander zwei Positionssensoren 5 angeordnet. Es ist auch denkbar, dass nur ein Positionssensor 5 vorgesehen ist oder dass pro Düse 3 nur jeweils ein Positionssensor 5 vorgesehen ist, wobei zwei oder mehr Düsengehäuse 4 einen Positionssensor 5 aufweisen. Es können aber auch mehr als zwei Positionssensoren an einer Düse montiert sein.

Die beiden Positionssensoren 5 erfassen nacheinander die Position der Becher 2. Durch diese Positionsmessung in Kombination mit dem Referenzsensor, der die aktuelle Winkelposition des Läufers 7 ermittelt, kann die Position eine jeden Bechers 2 sehr genau ermittelt werden. Wenn ein Becher 2 schwingt, verändert dies die Messignale, sodass daraus Rückschlüsse auf Vibrationen bzw. auf Vibrationsamplituden und letztendlich auch auf die Eigenfrequenz des Läufers 7 gezogen werden können. Im Bereich des Düsenendes ist der sogenannte Ablenker 6 bzw. Abschneider zur Spritzwasserumlenkung angeordnet.

### Bezugszeichen

- 1: Pelton-Turbine
- 2: Becher
- 3: Düse
- 4: Düsengehäuse
- 5: Positionssensor
- 6: Ablenker oder Abschneider
- 7: Läufer

## Patentansprüche

1. Hydraulische Maschine, durch die eine erzwungene Wasserströmung fließt, wobei die hydraulische Maschine einen Läufer (7) und ein den Läufer (7) umgebendes Gehäuse aufweist, wobei der Läufer (7) eine Vielzahl von Schaufeln oder Bechern (2) aufweist, **dadurch gekennzeichnet, dass** im Gehäuse zumindest ein feststehender Positionssensor (5) angeordnet ist, wobei der Positionssensor (5) neben der Bewegungsbahn der Schaufeln bzw. Becher (2) angeordnet ist, sodass er beim Vorbeistreichen einer Schaufel bzw. eines Bechers (2) ein Messsignal abgibt, und wobei ein Referenzsensor vorzugsweise an einer Turbinenwelle angeordnet ist, wodurch die aktuelle Winkelposition jeder Schaufel bzw. jedes Bechers (2) ermittelbar ist, sodass aus diesen Positionsdaten das dynamische Verhalten jeder Schaufel bzw. jedes Bechers (2) ermittelbar ist.

2. Hydraulische Maschine nach Anspruch 1, **dadurch gekennzeichnet, dass** der Positionssensor (5) die Messdaten im kHz oder MHz-Bereich erfasst.

3. Hydraulische Maschine nach Anspruch 1 oder 2,
**dadurch gekennzeichnet, dass** zumindest zwei Positionssensoren (5) im Gehäuse angeordnet sind.

4. Hydraulische Maschine nach Anspruch 1, **dadurch gekennzeichnet, dass** der oder die Positionssensoren (5) gegen Spritzwasser geschützt sind.

5. Hydraulische Maschine nach einem der Ansprüche 1 bis 3, **dadurch gekennzeichnet, dass** der Läufer (7) ein Pelton-Laufrad ist, das zumindest von einer Düse mit Wasser beaufschlagbar ist.

6. Hydraulische Maschine nach Anspruch 5, **dadurch gekennzeichnet, dass** der Positionssensor (5) im Düsengehäuse (4) angeordnet ist.

7. Hydraulische Maschine nach einem der Ansprüche 1 bis 3, **dadurch gekennzeichnet, dass** der Läufer (7) ein Francis-Laufrad ist.

8. Hydraulische Maschine nach einem der Ansprüche 1 bis 3, **dadurch gekennzeichnet, dass** es sich bei der hydraulischen Maschine um eine Pumpturbine handelt.

9. Hydraulische Maschine nach einem der Ansprüche 1 bis 3, **dadurch gekennzeichnet, dass** es sich bei der hydraulischen Maschine um eine Pumpe handelt.

10. Hydraulische Maschine nach einem der Ansprüche 1 bis 3, **dadurch gekennzeichnet, dass** es sich bei der hydraulischen Maschine um eine Kaplanturbine handelt.

## Claims

1. Hydraulic machine through which a forced flow of water flows, the hydraulic machine having a runner(7) and a housing surrounding the runner (7), the runner (7) having a plurality of vanes or buckets (2), **characterized in that** at least one fixed position sensor (5) is arranged in the housing, the position sensor (5) being arranged next to the path of movement of the vanes or buckets (2), so that it emits a measurement signal when a vane or bucket (2) passes, and a reference sensor preferably being arranged on a turbine shaft, whereby the current angular position of each vane or bucket (2) can be determined, so that the dynamic behaviour of each vane or bucket (2) can be determined from this position data.

2. Hydraulic machine according to Claim 1, **characterized in that** the position sensor (5) acquires the measurement data in the kHz or MHz range.

3. Hydraulic machine according to claim 1 or 2, **characterized in that** at least two position sensors (5) are arranged in the housing.

4. Hydraulic machine according to claim 1, **characterized in that** the position sensor or sensors (5) are protected against splashing water.

5. Hydraulic machine according to one of claims 1 to 3, **characterized in that** the runner (7) is a Pelton runner, which can be acted upon by water from at least one nozzle.

6. Hydraulic machine according to claim 5, **characterized in that** the position sensor (5) is arranged in the nozzle housing (4).

7. Hydraulic machine according to any one of claims 1 to 3, **characterized in that** the runner (7) is a Francis runner.

8. Hydraulic machine according to any one of claims 1 to 3, **characterized in that** the hydraulic machine is a pump turbine.

9. Hydraulic machine according to any one of claims 1 to 3, **characterized in that** the hydraulic machine is a pump.

10. Hydraulic machine according to any one of claims 1 to 3, **characterized in that** the hydraulic machine is a Kaplan turbine.

## Revendications

1. Machine hydraulique à travers laquelle circule un écoulement d'eau forcé, la machine hydraulique comportant une roue (7) et un carter entourant la roue (7), la roue (7) comportant une pluralité d'aubes ou d'augets (2), **caractérisée en ce qu'**au moins un capteur de position fixe (5) est disposé dans le carter, le capteur de position (5) étant disposé à proximité du chemin de déplacement des aubes ou des augets (2), de manière à ce qu'il émette un signal de mesure lorsqu'une aube ou un auget (2) lui passe, et dans laquelle un capteur de référence est de préférence disposé sur un arbre de turbine, la position angulaire actuelle de chaque aube ou auget (2) pouvant être ainsi déterminée, de sorte qu'à partir de ces données de position, il est possible de déterminer le comportement dynamique de chaque aube ou auget (2).

2. Machine hydraulique selon la revendication 1, **caractérisée en ce que** le capteur de position (5) acquiert les données de mesure dans une bande de kHz ou MHz.

3. Machine hydraulique selon la revendication 1 ou 2, **caractérisée en ce qu'**au moins deux capteurs de position (5) sont disposés dans le carter.

4. Machine hydraulique selon la revendication 1, **caractérisée en ce que** le capteur ou les capteurs de position (5) sont protégés contre les projections d'eau.

5. Machine hydraulique selon l'une quelconque des revendications 1 à 3, **caractérisée en ce que** la roue (7) est une roue motrice Pelton, qui peut être soumise à l'action de l'eau provenant d'au moins un gicleur.

6. Machine hydraulique selon la revendication 5, **caractérisée en ce que** le capteur de position (5) est disposé dans le carter de gicleur (4).

7. Machine hydraulique selon l'une quelconque des revendications 1 à 3, **caractérisée en ce que** la roue (7) est une roue motrice Francis.

8. Machine hydraulique selon l'une quelconque des revendications 1 à 3, **caractérisée en ce que** la machine hydraulique est une turbine de pompe.

9. Machine hydraulique selon l'une quelconque des revendications 1 à 3, **caractérisée en ce que** la machine hydraulique est une pompe.

10. Machine hydraulique selon l'une quelconque des revendications 1 à 3, **caractérisée en ce que** la machine hydraulique est une turbine Kaplan.
